Europäisches Patentamt

European Patent Office

Office européen des brevets

(19)

(11) Veröffentlichungsnummer : **0 166 326**
**B1**

(12) **EUROPÄISCHE PATENTSCHRIFT**

(45) Veröffentlichungstag der Patentschrift :
30.08.89

(21) Anmeldenummer : 85107368.4

(22) Anmeldetag : 14.06.85

(51) Int. Cl.⁴ : **G 06 K 19/08, B 42 D 15/02,**
**G 11 B 5/80**

(54) **Prägefolie, insbesondere Heissprägefolie mit einer Magnetschicht.**

(30) Priorität : 20.06.84 DE 3422911

(43) Veröffentlichungstag der Anmeldung :
02.01.86 Patentblatt 86/01

(45) Bekanntmachung des Hinweises auf die Patenterteilung : 30.08.89 Patentblatt 89/35

(84) Benannte Vertragsstaaten :
AT BE CH FR GB IT LI NL SE

(56) Entgegenhaltungen :
EP-A- 0 145 473
DE-B- 2 842 972
FR-A- 2 344 919
FR-A- 2 364 525
GB-A- 2 044 175
GB-A- 2 122 541
US-A- 4 092 526

(73) Patentinhaber : LEONHARD KURZ GMBH & CO.
Schwabacher Strasse 482
D-8510 Fürth/Bayern (DE)

(72) Erfinder : Der Erfinder hat auf seine Nennung verzichtet

(74) Vertreter : LOUIS, PÖHLAU, LOHRENTZ & SEGETH
Kesslerplatz 1 Postfach 3055
D-8500 Nürnberg (DE)

## Beschreibung

Die Erfindung betrifft eine Prägefolie, insbesondere Heißprägefolie, bestehend aus einer Trägerfolie und einer von dieser ablösbaren Übertragungslage, welche wenigstens eine Magnetschicht aus einer Dispersion magnetisierbarer Teilchen in einem Bindemittel aufweist, die gegebenenfalls auf ihrer der Trägerfolie abgekehrten Seite eine zur Festlegung der Übertragungslage an einem Substrat dienende Klebeschicht trägt.

Aus der am 08 03 1983 veröffentlichten US-PS 43 76 006 ist es bei einer derartigen Prägefolie bekannt, auf der zur Trägerfolie weisenden Seite der Magnetschicht eine Metallschicht und eine Lackschicht vorzusehen. Durch diese Ausbildung soll die Möglichkeit geschaffen werden, eine Magnet-Prägefolie auch in ansprechenden, hellen Farben zu gestalten, wozu die im allgemeinen dunkle Magnetschicht von der Metallschicht abgedeckt wird. Mit einem derartigen Vorgehen werden rein dekorative Zwecke verfolgt.

Es ist üblich, beispielsweise Scheckkarten, Kreditkarten, Sparkassenbücher und ähnliche Sicherheitsträger mit Magnetstreifen, signierbaren Streifen oder optisch in besonderer Weise wirksamen Strukturen zu versehen, um auf diese Weise die Möglichkeit zu bieten, gewisse Daten zu speichern bzw. die Fläschungssicherheit zu erhöhen. Ein Vorteil bei der Verwendung von Magnetstreifen besteht dabei darin, daß es sehr leicht möglich ist, eine entsprechende Speicherung relevanter Daten in den Magnetstreifen vorzunehmen. Nachteilig ist jedoch, daß bei den üblichen Magnetstreifen in verhältnismäßig einfacher Weise eine Löschung bzw. Verfälschung vorgenommen werden kann. Dies gilt grundsätzlich unabhängig davon, in welcher Weise der Magnetstreifen aufgebracht wird. Für eine Vielzahl von Anwendungsgebieten hat es sich allerdings als günstig herausgestellt, wenn man die Magnetstreifen mittels Prägefolien, insbesondere Heißprägefolien, aufbringt, weil dann die Anbringung auf dem Sicherheitsträger leicht möglich ist und gegebenenfalls sogar Kodierung des Magnetstreifens vor Aufbringung auf dem Sicherheitsträger erfolgen kann.

Bei gewissen Sicherheitsträgern, beispielsweise Kredit- und Scheckkarten ist zusätzlich ein Feld zur Anbringung der Unterschrift vorgesehen, wobei die entsprechende Karte erst nach Anbringung der Unterschrift gültig ist. Derartige Unterschriftenfelder werden bereits unter Verwendung von Prägefolien erzeugt, wobei auch bereits versucht wurde, durch spezielle Ausgestaltung des Untergrundes dieser Felder die Fälschungssicherheit der Karte zu verbessern, z.B. durch einen entsprechenden Aufdruck, durch Verwendung einer Grundierung, die bei Radierversuchen ihre Farbe ändert oder die mit der Schreibflüssigkeit unter Farbänderung reagiert etc. Bisher wurden jedoch die Unterschiftsflächen stets in einem besonderen Arbeitsgang an einer nur für die Unterschriftsfläche vorgesehenen Stelle erzeugt, da man davon ausging, daß die Unterzeichnung an einer Stelle erfolgen muß, die nicht für andere Zwecke verwendet wird. Eventuell auf der gleichen Karte vorhandene Magnetstreifen waren stets vollständig getrennt von dem Unterschriftsfeld angeordnet.

Aus der GB-A 2 044 175 ist eine Identifikationskarte bekannt, die aus einer Zwischenschicht und zwei Deckschichten besteht. Die obere Deckschicht trägt ein beschreibbares Signierfeld. Im Bereich unterhalb dieses Signierfeldes ist die untere Deckschicht mit einem Magnetstreifen versehen. Außerdem weist die Zwischenlage eine räumliche Musterung auf, die im Bereich der Signierschicht auf die obere Decklage übergreift. Die räumliche Musterung wird dabei mittels eines Laserstrahls erzeugt, und zwar erst nach Fertigstellung der Karte, so daß sie jeweils für die Karten einzeln aufgebracht werden muß. Die Magnetschicht ist an der Rückseite der Karte freiliegend vorgesehen.

In der gemäß Artikel 54 (3) zu berücksichtigenden EP-A 0 145 473 ist eine Identifikationskarte beschrieben, die an ihrer Oberseite eine mattierte Schicht aufweist, welche zur Erzeugung eines Bildes bzw. zur Widergabe einer Unterschrift graviert ist, wobei die Gravurschnitte die opake Deckschicht in unterschiedlicher Breite durchdringen, so daß eine dunklere, darunter liegende Schicht der Karte sichtbar wird. Diese Identifikationskarte stellt keine Prägefolie dar und ist auch nicht mittels einer Prägefolie hergestellt.

Der Erfindung liegt nun die Aufgabe zugrunde, eine Prägefolie, insbesondere Heißprägefolie vorzuschlagen, die einerseits ohne weiteres als Datenträger für veränderliche Daten dienen kann, andererseits aber auch die Möglichkeit bietet, beispielsweise Kredit- oder Scheckkarten mit einem Unterschriftsfeld zu versehen, wobei zudem eine weitgehende Fälschungssicherheit erreicht werden soll.

Zur Lösung dieser Aufgabe wird nach der Erfindung vorgeschlagen, eine Prägefolie der eingangs erwähnten Art so auszubilden, daß die Übertragungslage auf der zur Trägerfolie weisenden Seite der Magnetschicht zumindest bereichsweise wenigstens eine nach dem Prägen und Ablösen der Trägerfolie die Oberfläche bildende, beschreibbare Lachschicht (Signierschicht) aufweist, wobei zwischen der Signierschicht und der Magnetschicht eine ein Anlösen der Signierschicht durch in der Magnetschicht enthaltene Lösungsmittel verhindernde, von einer Schicht eines vernetzenden Lackes gebildete Sperrschicht vorgesehen ist.

Die Prägefolie nach der Erfindung beinhaltet also zum einen eine Magnetschicht, so daß sie in der Lage ist, veränderliche oder feste Daten zu speichern, wobei die Kodierung dieser Magnetschicht in an sich bekannter Weise erfolgen kann. Besonders wesentlich ist aber, daß die Magnetschicht von einer beschreibbaren Schicht, der Signierschicht, abgedeckt ist, wobei diese Signierschicht über die gesamte Fläche der Magnetschicht oder auch nur bereichsweise, z.B. in diskreten, für die Unterschrift ausreichenden Feldern vorgesehen sein kann. Die Anbringung der Signierschicht über der Magnetschicht (beim fertigen Produkt) bringt den Vorzug, daß weniger Platz für den Magnetstreifen und das Unterschriftsfeld auf einer Karte erforderlich ist, was einerseits im Sinne einer Verkleinerungsmöglichkeit der Karte günstig sein kann, andererseits im Sinne einer Vergrößerung des für die Unterschrift und die Speicherung von Daten in der Magnetschicht zur Verfgügung stehenden Flächenbereichs. Außerdem kann die Signierschicht wesentlich ansprechender gestaltet werden als die Magnetschicht, die ja meist — wegen des Metallpigments — verhältnismäßig dunkel ist und somit von den üblicherweise hellen Kredit- oder Scheckkarten absticht. Trotz des Vorhandenseins der Magnetschicht kann im übrigen die Signierschicht in der von bisherigen Folien für Unterschriftsfelder bekannten Weise graphisch gestaltet oder auch mit Zusätzen versehen werden, die eine Verfälschung der Unterschrift schwer oder unmöglich machen. Man erhält also nach der Erfindung eine Folie, die zum einen eine wesentliche Arbeitsvereinfachung bei der Anbringung eines Magnetstreifens bzw. Unterschriftenfelds auf Kreditkarten etc. ermöglicht, zum anderen wesentlich ansprechender aussieht als die bisherigen Magnetstreifen und schließlich bei gleichem Platzbedarf im Vergleich zu den bisher üblichen Magnetstreifen bzw. Signierfeldern bei gleicher Kartengröße mehr Fläche besitzen kann.

Aus der FR-A 2 344 919 ist zwar bereits ein Magnetband bekannt, welches mit einer ein Beschreiben gestattenden Schicht versehen ist. Derartige Magnetbänder werden so hergestellt, daß zuerst die Magnetschicht auf das Grundband aufgebracht wird, wobei die Magnetschicht mit entsprechenden Zusätzen versehen ist, die sie im wesentlichen unlöslich machen. Auf die Magnetschicht wird dann die beschreibbare Schicht aufgebracht. Hierbei kann man für die Magnetschicht Materialien verwenden, die sich ohne weiteres durch Zusätze so einstellen lassen, daß sie durch die Signierschicht nicht anzulösen sind. Bei Herstellung einer Prägefolie dagegen muß man auf die Trägerfolie zuerst die Signierschicht aufbringen. Anschließend wird dann die Magnetschicht aufgetragen, welche im allgemeinen recht aggressive Lösungsmittel enthält. Es ist nun nicht möglich, die Signierschicht mit entsprechenden, eine Vernetzung bewirkenden Zusätzen zu versehen, weil dann eine zu feste Verbindung zu der Trägerfolie erhalten würde, die ein Ablösen der Signierschicht von der Trägerfolie unmöglich machen würde. Es wäre zwar denkbar, zwischen Signierschicht und Trägerfolie eine Wachs-Trennschicht vorzusehen. Diese Möglichkeit scheidet jedoch in der Praxis ebenfalls aus, weil dann die zu beschreibende Oberfläche der Signierschicht zu glatt würde.

Um eine hinreichende Rauhigkeit der Signierschicht zu erzielen, ist es günstig, wenn die Signierschicht von einer beim Ablösen der Trägerfolie in sich zerreißenden, rauhen Lackschicht, beispielsweise einer Schicht mit einem ausreichenden Pigmentzusatz, gebildet ist.

Dieses Vorgehen unterscheidet sich erheblich von dem Vorschlag gemäß GB-A 21 22 541, wonach zur Erzeugung einer beschreibbaren Schicht ein sehr starker Pigmentzusatz vorgesehen ist. Wenn der Lack zu viele Pigmente enthält, hat dies nämlich den Nachteil, daß er nicht hinreichend abriebfest ist.

Gerade bei Dokumenten bzw. Sicherheitsträgern mit Magnetstreifen wird versucht, die in den Magnetstreifen gespeicherten, veränderlichen Daten zu manipulieren, um beispielsweise ein größeres Guthaben oder einen größeren Kreditrahmen vorzutäuschen. Aus diesem Grunde besteht das Bestreben, die Fälschungssicherheit der auf Magnetstreifen gespeicherten Daten zu erhöhen. Hierzu gibt es verschiedene, bekannte Verfahren. Beispielsweise ist es bereits bekannt, in der Beschichtung des Magnetbandes ein unter einem Winkel von 45° gegenüber der Längsrichtung ausgerichtetes Muster der magnetisierbaren Pigmente zu erzeugen. Dieses 45°-Grundmuster der Magnetisierung läßt sich mit einem für Fälschungen üblicherweise vertretbaren Aufwand und den bekannten Geräten nicht verändern.

In der US-A 4 092 526 ist eine andere Möglichkeit erläutert, zusätzlich zu einem Magnetstreifen über weitere Elemente eine erhöhte Fälschungssicherheit zu erzielen. Hierzu sind unterhalb des Magnetstreifens Metallflächen eingearbeitet, die Strahlungsenergie reflektieren, d.h. insbesonders ultrarote Strahlung. Durch die Größe und Gestaltung dieser Elemente kann eine zusätzliche Kennzeichnung erfolgen.

Eine weitere, bekannte Möglichkeit ist die der Verwendung eines 2-Schichtenmagnetbandes, wobei eine Schicht eine hohe Koerzitivkraft hat, d.h. schwer veränderbare Informationen trägt, während bei der anderen, üblicherweise oben liegenden Schicht die löschbaren Daten mit niedriger Koerzitivkraft eingegeben werden. Derartige 2-Schicht-Magnetbänder sind aber vergleichsweise schwer herzustellen und problematisch zu kodieren. Bei ihnen scheidet außerdem die Anbringung einer zusätzlichen beschreibbaren Schicht aus.

Zur Erhöhung der Fälschungssicherheit wird nun erfindungsgemäß weiter vorgeschlagen, daß die Übertragungslage zwischen der Magnetschicht und der Signierschicht mindestens eine eine beugungsoptisch wirksame, insbesondere holographische Musterung aufnehmende Beugungsschicht umfaßt, wobei die Signierschicht derart bereichsweise aufgebracht ist, daß die beugungsoptisch wirksame Musterung nach dem Ablösen der Trägerfolie von der Seite der Signierschicht her noch erkennbar ist. Die beugungsoptisch wirksame, insbesondere holographische Musterung gestattet es bei der Prägefolie gemäß der Erfindung, neben den in der Magnetschicht gespeicherten, veränderlichen Daten weitere, nicht veränderliche Daten zu speichern, beispielsweise fixe Daten über den Inhaber der Karte etc. Will man nun versuchen, diese fixen Daten bei einer Fälschung zu ändern, muß damit gerechnet werden, daß die beugungsoptisch wirksame Musterung, gegebenenfalls sogar die Magnetschicht, zerstört wird. Dies gilt vor allem, da die beugungsoptisch wirksame Musterung ja neben der Signierschicht vorgesehen ist.

Trotz des Vorhandenseins der beugungsoptisch wirksamen Musterung und der Signierschicht läßt sich die Folie nach der Erfindung derart ausbilden, daß die über der Magnetschicht liegenden Schichten so dünn sind, daß das von der Magnetschicht abgegebene Signal den einschlägigen Normen entspricht. Dabei hängt die zulässige Schichtdicke der Signierschicht und der Beugungsschicht wesentlich von den magnetischen Eigenschaften der Magnetschicht ab, insbesondere von der Art, dem Dispergierzustand, dem Orientierungsverhältnis, der Pigmentierungshöhe und der Schichtdicke der Magnetschicht, natürlich auch von dem verwendeten Pigment. Es können, wie Versuche gezeigt haben, vergleichsweise dünne Magnetschichten mit einer Schichtdicke von weniger als 10 $\mu$m verwendet werden, was vor allem vorteilhafte Einflüsse auf die Verarbeitbarkeit der Folie sowie deren Eigenschaften, beispielsweise hinsichtlich des Zusammenhaltes der Schichten, hat. Die Signierschicht kann außerdem, trotz der vorhandenen Beugungsschicht, so glatt werden, und zwar wegen ihres unmittelbaren Anliegens an der Trägerfolie, daß sich nach dem Prägen eine sehr geringe Oberflächenrauhigkeit ergibt, weil ja die Glätte der Oberfläche der Prägung von der Oberfläche der Trägerfolie abhängt. Wird beispielsweise als Trägerfolie ein Polyesterfilm verwendet, so kann man davon ausgehen, daß dessen Oberflächenrauhigkeit kleiner als 1 $\mu$m ist, d.h. weit über der für Magnetfolien geforderten Norm eines Mittelrauhwertes von höchstens 2,5 $\mu$m·liegt.

Es ist erfindungsgemäß möglich, die Signierschicht nur in gegenüber den die beugungsoptisch wirksame Musterung aufweisenden Flächenbereichen abgegrenzten Flächenbereichen der Prägefolie vorzusehen, also beispielsweise die beugungsoptisch wirksame Musterung neben dem Unterschriftsfeld vorzusehen.

Besonders günstig ist es jedoch, wenn die Signierschicht die Beugungsschicht nur rasterartig überdeckend angeordnet ist. Bei einer derartigen Ausbildung der Folie wird die Signierschicht nur in einem Rasterdruck aufgebracht, wobei unterschiedliche Raster gewählt werden können, beispielsweise Punktraster, Linienraster oder auch Raster in Form eines ganz speziell gestalteten Kennzeichens. Trotz der Anbringung der Signierschicht in einer Weise, daß sie die Beugungsschicht rasterartig überdeckt, kann die beugungsoptisch wirksame Musterung, insbesondere das Hologramm, im allgemeinen noch erkannt oder sogar mit Maschinen gelesen werden, weil bei Hologrammen und anderen, speziellen beugungsoptischen Musterungen davon auszugehen ist, daß diese auch dann noch alle Informationen liefern, wenn ein Teil der Musterung abgedeckt ist. Dies beruht darauf, daß jedes Flächenelement der beugungsoptischen Musterung die Gesamtheit der in der Musterung gespeicherten Informationen zu liefern in der Lage ist, allerdings gegebenenfalls nur mit verringertem Signal-Rauschabstand.

Die Aufbringung der Signierschicht nur in begrenzten Flächenbereichen würde dazu führen, daß sich eine unerwünschte Oberflächenwelligkeit der Folie nach dem Abprägen ergibt. Um dies zu vermeiden, wird nach der Erfindung weiter vorgeschlagen, daß die nicht von der Signierschicht abgedeckten Flächenbereiche der Beugungsschicht und/oder Magnetschicht zur Bildung einer ebenen Oberfläche der Übertragungslage mit einer Klarlackschicht entsprechender Dicke abgedeckt sind, wobei die Klarlackschicht zweckmäßig von einem Ablöselack gebildet ist. Die Klarlackschicht stört die Lesbarkeit der beugungsoptisch wirksamen Musterung nicht. Wenn die Klarlackschicht von einem Ablöselack gebildet ist, kann darauf verzichtet werden, zwischen der Trägerfolie und der Signierschicht eine besondere Trennschicht einzubringen. Es ergibt sich weiter der Vorteil, daß sich die Signierschicht schwerer von der Trägerfolie löst als die· Klarlackschicht, was dazu führt, daß Teile der Signierschicht an der Trägerfolie hängenbleiben und eine Aufrauhung der Oberfläche der Signierschicht in dem zum Beschreiben hinreichenden Maß erfolgt.

Die beugungsoptisch wirksame Musterung wird erfindungsgemäß vorteilhaft in eine als Beugungsschicht dienende Schutzlackschicht für die Magnetschicht eingeprägt, d.h. beispielsweise in die Sperrschicht zwischen Magnetschicht und Signierschicht. Insbesondere bei Nutzung der Sperrschicht für die Einbringung der beugungsoptisch wirksamen Musterung ergibt sich keine Vergrößerung der Dicke gegenüber den üblichen Magnetprägefolien. Weiterhin ist die Herstellung der Folie sehr einfach, da, abgesehen vom Einprägen der beugungsoptisch wirksamen Musterung, kein zusätzlicher Arbeitsgang erforderlich ist. Bei Anbringung der beugungsoptisch wirksamen Musterung auf der zur Magnetschicht weisenden Seite der Beugungsschicht erreicht man zusätzlich den Vorteil, daß die beugungsoptisch wirksame Musterung nach dem Abprägen der Folie immer noch geschützt ist und insbesondere die Glätte der Oberfläche der Folie nicht beeinträchtigt wird.

Die beugungsoptisch wirksamen Musterungen werden im allgemeinen holographische Beugungsmuster sein. Dabei ist sowohl an sichtbare als auch an mit dem bloßen Auge oder unter normaler Beleuchtung nicht sichtbare Hologramme gedacht. Weiter erfaßt der Begriff « beugungsoptisch wirksame Musterung » im Sinne der Erfindung sowohl solche Musterungen, die maschinell lesbar sind, als auch Musterungen, die kein maschinelles Lesen gestatten. Insbesondere dann, wenn die beugungsoptisch wirksamen Musterungen mit bloßem Auge sichtbar oder maschinell lesbar sein sollen, ist es günstig, wenn auf der zur Trägerfolie weisenden Seite der Magnetschicht zwischen dieser und einer Schutzlackschicht eine Schicht eines nicht magnetisierbaren Metalls vorgesehen ist, die die beugungsoptisch wirksame Musterung zeigt, wobei die Metallschicht zweckmäßig eine aufgedampfte Schicht aus Aluminium oder einer Aluminium-Legierung ist. Die Anbringung einer solchen zusätzlichen Metallschicht kann eine bessere Sichtbarkeit der optisch wirksamen Musterung bewirken. Es können mit ihr außerdem weitere Effekte hinsichtlich des Aussehens des zu sichernden Dokuments erreicht werden, was für bestimmte Anwendungsgebiete, beispielsweise Kreditkarten etc. wichtig sein kann.

Schließlich liegt es im Rahmen der Erfindung, daß die Magnetschicht und/oder die Signierschicht und/oder die Beugungsschicht und/oder die Klarlackschicht und/oder die Sperrschicht gefärbt ist, um auf diese Weise besondere optische oder dekorative Effekte zu erzielen.

Die Aufbringung der Lackschichten bei der Folie gemäß der Erfindung kann mittels der an sich für die Prägefolien-Herstellung bekannten Verfahren in Abhängigkeit von der Viskosität des verarbeiteten Lackes und der jeweiligen Schichtdicke erfolgen, z.B. mittels Rasterwalzen (Tiefdruck), Rollrakel, Reverse Roller, Gießen etc. Zur Metallisierung werden ebenfalls die bekannten Verfahren eingesetzt, die ohne Pigment arbeiten, z.B. Vakuumaufdampfen oder Kathodenstrahlzerstäuben.

Weitere Merkmale, Einzelheiten und Vorteile der Erfindung ergeben sich aus der folgenden Beschreibung zweier bevorzugter Ausführungsbeispiele von Heißprägefolien nach der Erfindung anhand der Zeichnung. In der Zeichnung stellen dar :

Fig.1 einen Schnitt durch eine Prägefolie mit einer Magnetschicht und einer Signierschicht und

Fig.2 einen Schnitt durch eine Heißprägefolie mit einer Magnetschicht, einer Beugungsschicht und einer Signierschicht.

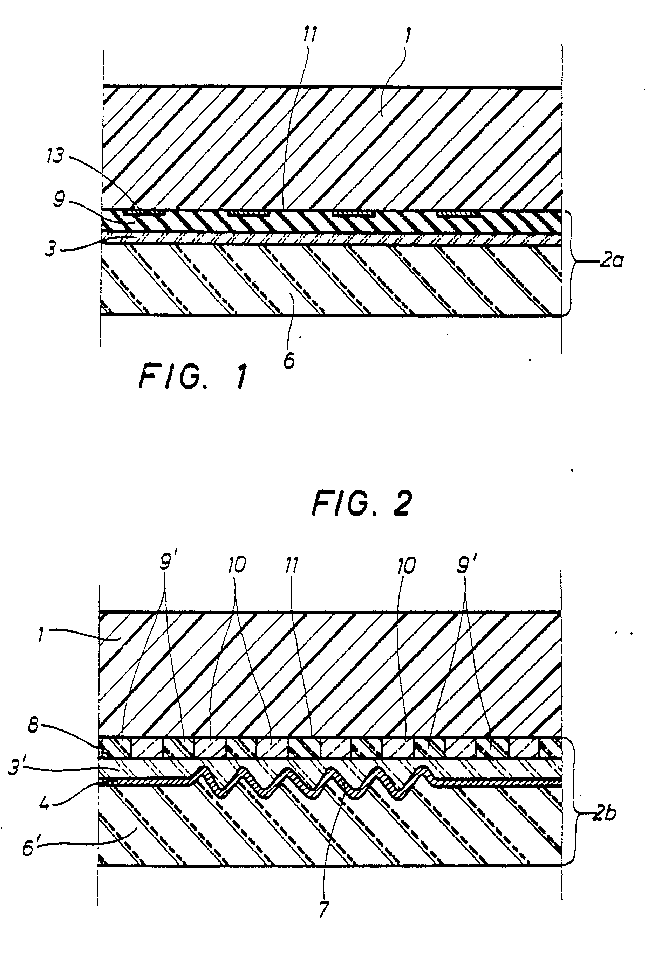

Die Prägefolien gemäß den gezeigten Ausführungsbeispielen umfassen jeweils eine Trägerfolie 1, die z. B. eine Stärke von etwa 19 µm hat und aus Polyethylenglykolterephthalat besteht. Auf diese Trägerfolie 1 ist eine Übertragungslage 2a bzw. 2b aufgedruckt, die von der Trägerfolie 1 nach Aufbringung auf ein Substrat abgelöst werden kann. Der Unterschied der Folien gemäß den Figuren 1 und 2 besteht in dem Aufbau der Übertragungslage 2a bzw. 2b.


Beispiel 1 (Figur 1)


Die Übertragungslage 2a umfaßt, ausgehend von der Trägerfolie 1, eine, teilweise von einem Zwischenaufdruck 13 unterbrochene Signierschicht 9, eine Trenn-Lackschicht 3 sowie die Magnetschicht 6. Die Dicke der jeweiligen Schichten ist nicht maßstabsgerecht dargestellt. Beispielsweise besitzt der Polyesterfilm eine Dicke von etwa 10 bis 25, vorzugsweise 19 µm. Die Signierschicht kann 0,5 bis 2, vorzugsweise etwa 1,5 µm dick sein. Die Dicke der Trennschicht 3 aus einem vernetzten Lack liegt zwischen 0,5 bis 1, vorzugsweise bei etwa 0,8 µm. Die Magnetschicht besitzt die übliche Dicke von 4 bis 13, vorzugsweise etwa 9 µm. Anschließend an die Magnetschicht 6 könnte gegebenenfalls noch eine Klebeschicht mit einer Stärke von 0 bis 4, vorzugsweise etwa 1,5 µm vorgesehen sein, auf die jedoch im Hinblick auf die spezielle Zusammensetzung der Magnetschicht 6 häufig, vor allem bei Anbringung der Prägefolie gemäß Beispiel 1 auf Karten aus PVC verzichtet werden kann.

Die Lackschichten 3, 6, 9 und 13 haben folgende Zusammensetzung :

Lack A (Signierschicht 9)

| Komponente | Gew.-Teile |
| --- | --- |
| PVC/PVac-Mischpolymerisat esterlösliche, niedrigviskose | 4000 |
| Nitrocellulose | 2000 |
| ölfreies Alkyd | 50 |
| Verlaufmittel | 800 |
| Dioctylphthalat | 500 |
| Methylethylketon | 25 000 |
| Toluol | 2 000 |
| Ethylacetat | 2 000 |
| Cyclohexanon | 1 000 |
| Diacetonalkohol | 1 000 |
| Titandioxid Rutil | 20 000 |
| Gleitmittel | 1 000 |

Lack B (Dekordruck 13)

Zusammensetzung wie Lack A, jedoch zusätzlich

| Komponente | Gew.-Teile |
| --- | --- |
| Metallkomplexfarbstoff Schwarz | 250 |
| Metallkomplexfarbstoff Blau 807 | 180 |
| Pigmentpräparation in Maleinatharz Karminfarbig | 100 |

Lack C (Sperrschicht 3)

| Komponente | Gew.-Teile |
|---|---|
| Methyl-/n-Buthylmethacrylat | 1 000 |
| Niedrigviscose Nitrocellulose | 1 000 |
| Phenol-modifiziertes Kolophoniumharz | 500 |
| Methylethylketon | 4 000 |
| Toluol | 3 000 |
| Ethylacetat | 1 500 |
| Butylacetat 98/100 | 3 000 |

Lack D (Magnetschicht 6)

Die Magnetschicht 6 besteht aus einer Dispersion nadelförmigen $\gamma$-Fe$_2$O$_3$-Magnetpigments in einem Polyurethanbindemittel, verschiedenen Lackhilfsmitteln und einem Lösungsmittelgemisch aus Methylethylketon und Tetrahydrofuran. Derartige Magnetdispersionen sind an sich bekannt. Die Magnetschicht muß aber nich unbedingt die vorstehend erwähnte Zusammensetzung haben. Anstelle der Fe$_2$O$_3$-Pigmente können z. B. auch andere Magnetpigmente, beispielsweise Co-dotierte magnetische Eisenoxide oder sonstige fein dispergierte magnetische Materialien (Sr, Ba-Ferrite) verwendet werden. Die Bindemittelkombination der Magnetschicht wird an das zu beprägende Substrat angepaßt.

Bei Herstellung der Prägefolie gemäß Figur 1 wird wie folgt vorgegangen : auf die Trägerfolie 1 wird zuerst der Lack B in einem bestimmten Dekor mit einem Tiefdruckverfahren und einem Auftragsgewicht von 0,4 g/m$^2$ aufgetragen, wobei ein Flächenbedeckungsgrad von 0,2 angenommen wird. Anschließend wird dann der Lack A in einem Tiefdruckverfahren mit Linienraster und mit einem Auftragsgewicht von 5,0 g/m$^2$ aufgebracht und hierauf der Lack C, ebenfalls im Tiefdruck mit Linienraster, jedoch nur mit einem Auftragsgewicht von etwa 1,5 g/m$^2$. Die Trocknung erfolgt jeweils bei etwa 100 bis 120 °C.

Der Lack C ist dabei so aufgebaut, daß er eine Sperrschicht zwischen dem anschließend aufzutragenden Magnetlack und dem üblicherweise hellen Lack der Signierschicht 9 darstellt.

Nach dem Trocknen der Lackschichten A, B und C erfolgt der Auftrag der Magnetdispersion in an sich bekannter Weise, wobei die Eisenoxidnadeln der Magnetdispersion noch im nassen Lack mittels starker Magnete in Längsrichtung der Folie ausgerichtet werden. Anschließend wird die Folie in der für Magnetfolien üblichen Weise kalandriert.

Zur Überprüfung der magnetischen Eigenschaften der Übertragungslage 2a wird diese in einem an sich bekannten Heißprägeverfahren (z. B. durch Abrollen bei 180 °C) auf PVC-Karten übertragen und die Signal-Lese-Spannung in Abhängigkeit von der Schreibstromstärke ermittelt. Die Versuche haben gezeigt, daß die Folie die Anforderungen üblicher Normen bezüglich Signalstärke und Abriebfestigkeit sowie Oberflächenrauhigkeit erfüllt.

## Beispiel 2 (Figur 2)

Die Prägefolie gemäß Figur 2 hat eine Übertragungslage 2b, die ebenso wie die Übertragungslage 2a des Ausführungsbeispiels 1 nach Figur 1 eine Magnetschicht 6' sowie eine zumindest bereichsweise mit einem beschreibbaren Lack 9' ausgestattete Oberflächenschicht 8 aufweist. Der wesentliche Unterschied der Folie gemäß Figur 2 zu der nach Figur 1 besteht darin, daß bei ihr die Übertragungslage 2b zusätzlich mit einer beugungsoptisch wirksamen Musterung 7 versehen ist.

Die oberflächliche Schicht 8 muß bei der Folie gemäß Figur 2 derart gestaltet sein, daß trotz ihres Vorhandenseins bei der abgeprägten Folie, d.h. wenn die Trägerfolie 1 entfernt ist, die beugungsoptisch wirksame Musterung 7 von der Seite der Trägerfole 1 her sichtbar ist. Dies erreicht man dadurch, daß die eigentliche Signierschicht der Schicht 8 nur bereichsweise vorgesehen ist. Zu diesem Zweck ist bei dem gezeigten Ausführungsbeispiel die Schicht 8 aus zweierlei Lacken gebildet, nämlich dem üblicherweise nicht transparenten, beschreibbaren Lack 9', welcher rasterartig aufgetragen ist, beispielweise als Punktraster, Strichraster etc., sowie einem weiteren, transparenten oder durchscheinenden Lack 10, der jeweils in den Zwischenräumen der mit dem Lack 9' bedeckten Bereiche vorgesehen ist. Der beschreibbare Lack 9' und der die Zwischenräume ausfüllende Lack 10 sind in etwa in gleicher Schichtdicke vorgesehen, so daß sich zu der Trägerfolie 1 hin eine in etwa ebene Oberfläche 11 ergibt. Trotz des Vorhandenseins des nicht-transparenten Lackes 9' kann erreicht werden, daß die Musterung 7, vor allem wenn es sich um ein Hologramm handelt, gelesen werden kann, wenn auch mit einem schlechteren Signal-Rauschabstand, da es bei Hologrammen möglich ist, in jedem Bereich die sämtlichen Informationen zu speichern.

Es werden folgende Lacke verwendet :

Lack F (transparenter Lack 10)

| Komponente | Gew.-Teile |
|---|---|
| hochmolekulares PMMA-Harz | 2 000 |

| | |
|---|---|
| Silikonalkyd ölfrei | 300 |
| nichtionisches Netzmittel | 50 |
| niedrigviscose Nitrocellulose | 750 |
| Methylethylketon | 12 000 |
| Toluol | 2 000 |
| Diacetonalkohol | 2 500 |

Lack G (beschreibbarer Lack 9')

| Komponente | Gew.-Teile |
|---|---|
| PVC/PVac-Mischpolymerisat | 4 000 |
| niedrigviscose Nitrocellulose | 2 000 |
| ölfreies Alkyd | 50 |
| Silikonpolyesterharz | 2 000 |
| Verlaufmittel | 800 |
| Dioctylphthalat | 500 |
| Methylethylketon | 25 000 |
| Toluol | 2 000 |
| Ethylacetat | 2 000 |
| Cyclohexanon | 1 000 |
| Diacetonalkohol | 1 000 |
| Calciumcarbonat | 25 000 |

Lack H (Beugungsschicht 3')

| Komponente | Gew.-Teile |
|---|---|
| Methyl-/n-Butyl-Methacrylat | 1 000 |
| niedrigviscose Nitrocellulose | 1 000 |
| Phenol-modifiziertes Kolophonium-Harz | 500 |
| Methylethylketon | 4 000 |
| Toluol | 3 000 |
| Ethylacetat | 1 500 |
| Butylacetat | 3 000 |

Magnetschicht 6' (siehe Beispiel 1)

Die Herstellung der Prägefolie gemäß Beispiel 2 geschieht folgendermaßen :

In einer 2-Farben-Druckmaschine mit einer Passungsungenauigkeit von weniger als 0,05 mm werden mit zwei Tiefdruckdekorwalzen auf eine Polyethylenglykolterephthalatfolie von 19 $\mu$m Dicke genau ineinanderpassend die Lacke F und G gedruckt, die zunächst nach den obenerwähnten Vorschriften, jedoch mit dem erniedrigten Lösungsmittelgehalt hergestellt und nach Testdrucken soweit verdünnt werden, daß die Trockenschichtdicke der beiden Lacke gerade gleich groß wird und etwa 1,5 $\mu$m beträgt. Man erhält somit auf der Folie 1 eine durchgehende Lackschicht 8 von in etwa gleicher Dicke, die aus Bereichen 9' des beschreibbaren Lackes G und anderen Bereichen 10 des Lackes F besteht, wobei der Lack F gleichzeitig die Eigenschaft hat, sich gut von der Trägerfolie I zu lösen, während der Lack G an der Trägerfolie gegebenenfalls haftet, so daß beim Abziehen der Trägerfolie 1 der Lack G oberflächlich abreißt und sich eine rauhe Oberfläche ergibt.

Anschließend an das Bedrucken der Folie mit den Lacken F und G wird mit einer Linienraster-Tiefdruckwalze der Lack H in einem Flächengewicht von 1,2 g/m$^2$ aufgetragen und bei 120 °C getrocknet. In den Lack H wird dann bei etwa 130 °C mittels einer beispielsweise aus Nickel bestehenden Matritze die beugungsoptisch wirksame Musterung 7, im vorliegenden Fall ein Hologramm, eingeprägt. Das Einprägen geschieht abhängig von der Formel des für die Schicht 3' verwendeten Lackes zu einem unterschiedlichen Zeitpunkt. Anschließend an das Einprägen der Musterung 7 erhärtet die Lackschicht 3' durch Vernetzung oder in sonstiger Weise. Zum Prägen der Musterung 7 wird die Matritze vorzugsweise elektrisch aufgeheizt. Vor dem Abheben der Matritze von der Lackschicht 3' nach der Prägung kann die Matritze wieder abgekühlt werden.

Sobald die Musterung 7 eingeprägt und die Lackschicht 3' hinreichend hart ist, wird die Lackschicht 3' bei etwa 1,3 . 10$^{-4}$ mbar mit Aluminium in einer Schichtdicke von ca. 200 . 10$^{-10}$ mA bedampft.

Anschließend wird die Magnetdispersion 6' in einer Dicke von etwa 9 $\mu$m aufgebracht und in der üblichen Weise durch Kalandrieren sowie Ausrichten der Magnetpartikel fertiggestellt.

Grundsätzlich wäre es auch denkbar, die beugungsoptisch wirksame Musterung 7 nicht direkt in die Lackschicht 3' einzuprägen sondern erst die Metallschicht 4 aufzubringen und die Musterung 7 dann erst in diese einzuprägen.

Auch die Prägefolie nach Figur 2 zeigt in den üblichen Tests, daß sie den Bestimmungen der gängigen Normen für Magnetdatenträger entspricht, insbesondere hinreichende Signalspannungen und eine ausreichende Abriebfestigkeit erreicht.

Vorliegende Anmeldung ist eine von drei miteinander im Zusammenhang stehenden Anmeldungen, die gleichzeitig hinterlegt wurden, wobei der Gegenstand der jeweiligen Hauptansprüche jedoch unterschiedlich ist. Bei den beiden anderen Anmeldungen handelt es sich um die Anmeldungen Nr. 85 107 369.2 und 85 107 370.0 (EP-A-0 170 832 bzw. EP-A-0 171 540).

## Patentansprüche

1. Prägefolie, insbesondere Heissprägefolie, bestehend aus einer Trägerfolie (1) und einer von dieser ablösbaren Übertragungslage, (2a, 2b) welche wenigstens eine Magnetschicht (6, 6') aus einer Dispersion magnetisierbarer Teilchen in einem Bindemittel aufweist, die gegebenenfalls auf ihrer der Trägerfolie (1) abgekehrten Seite einer zur Festlegung der Übertragungslage an einem Substrat dienende Klebeschicht trägt, dadurch gekennzeichnet, dass die Übertragungslage (2a, 2b) auf der zur Trägerfolie (1) weisenden Seite der Magnetschicht (6, 6') zumindest bereichsweise wenigstens eine nach dem Prägen und Ablösen der Trägerfolie die Oberfläche (11) bildende, beschreibbare Lackschicht als Signierschicht (9, 9') aufweist, wobei zwischen der Signierschicht (9, 9') und der Magnetschicht (6, 6') eine ein Anlösen der Signierschicht durch in der Magnetschicht (6, 6') enthaltende Lösungsmittel verhindernde, von einer Schicht eines vernetzenden Lackes gebildete Sperrschicht (3, 3') vorgesehen ist.

2. Prägefolie nach Anspruch 1, dadurch gekennzeichnet, dass die Signierschicht (9, 9') von einer beim Ablösen der Trägerfolie (1) in sich zerreissenden, rauhen Lackschicht gebildet ist.

3. Prägefolie nach einem der vorhergehenden Ansprüche, dadurch gekennzeichnet, dass die Übertragungslage (2b) zwischen der Magnetschicht (6') und der Signierschicht (9') mindestens eine eine beugungsoptisch wirksame, insbesondere holographische Musterung (7) aufnehmende Beugungsschicht (3') umfasst, wobei die Signierschicht (8) derart bereichsweise aufgebracht ist, dass die beugungsoptisch wirksame Musterung (7) nach dem Ablösen der Trägerfolie (1) von der Seite der Signierschicht (9') her noch erkennbar ist.

4. Prägefolie nach Anspruch 3, dadurch gekennzeichnet, dass die Signierschicht (9') in gegenüber den die beugungsoptisch wirksame Musterung (7) aufweisenden Flächenbereichen abgegrenzten Flächenbereichen der Prägefolie vorgesehen ist.

5. Prägefolie nach Anspruch 3, dadurch gekennzeichnet, dass die Signierschicht (9') die Beugungsschicht (3') nur rasterartig überdeckend angeordnet ist.

6. Prägefolie nach einem der vorhergehenden Ansprüche, dadurch gekennzeichnet, dass die nicht von der Signierschicht (9') abgedeckten Flächenbereiche der Beugungsschicht (3') und/oder Magnetschicht (6') zur Bildung einer ebenen Oberfläche (11) der Übertragungslage (2b) mit einer Klarlackschicht (10) entsprechender Dicke abgedeckt sind.

7. Prägefolie nach Anspruch 6, dadurch gekennzeichnet, dass die Klarlackschicht (10) von einem Ablöselack gebildet ist.

8. Prägefolie nach einem der Ansprüche 1 bis 7, dadurch gekennzeichnet, dass die Beugungsschicht (3') von einer Schutzlackschicht für die Magnetschicht (6) gebildet ist, in die die beugungsoptisch wirksame Musterung (7) eingeprägt ist.

9. Prägefolie nach Anspruch 8, dadurch gekennzeichnet, dass die beugungsoptisch wirksame Musterung (7) auf der zur Magnetschicht weisenden Seite der Beugungsschicht (3') eingeprägt ist.

10. Prägefolie nach einem der Ansprüche 3 bis 9, dadurch gekennzeichnet, dass auf der zur Trägerfolie (1) weisenden Seite der Magnetschicht (6) zwischen dieser und einer Schutzlackschicht (3') eine Schicht (4) eines nicht magnetisierbaren Metalles vorgesehen ist, die die beugungsoptisch wirksame Musterung (7) zeigt.

11. Prägefolie nach Anspruch 10, dadurch gekennzeichnet, dass die Metallschicht (4) eine aufgedampfte Schicht aus Aluminium oder einer Aluminium-Legierung ist.

12. Prägefolie nach einem der vorhergehenden Ansprüche, dadurch gekennzeichnet, dass die Magnetschicht (6, 6') und/oder die Signierschicht (9, 9') und/oder die Beugungsschicht (3') und/oder die Klarlackschicht (10) und/oder die Sperrschicht (3, 3') gefärbt ist.

## Claims

1. A stamping or blocking foil, in particular a hot stamping foil, consisting of a carrier foil (1) and a transfer layer (2a, 2b) detachable therefrom, having at least one magnetic layer (6, 6') made of a dispersion of magnetisable particles in a binding agent, which, if required, carries on its opposite side to the carrier foil (1), an adhesive layer serving to fix the transfer layer on a substrate, characterized in that the transfer layer (2a, 2b) has, on the side of the magnetic layer (6, 6') facing the carrier foil (1), at least zonally, at least one inscribable lacquer layer as the signing layer (9, 9'), forming the surface (11) after the carrier foil has been blocked and detached, provision being made between the signing layer (9, 9') and the magnetic layer (6, 6') for a barrier layer (3, 3') formed by a layer of a cross-linking lacquer which prevents a surface dissolution of the signing layer by the solvents contained in the magnetic layer (6, 6').

2. A stamping or blocking foil according to claim 1, characterized in that the signing layer (9, 9') is formed by a coarse lacquer layer which is rent as the carrier foil (1) is being detached.

3. A stamping or blocking foil according to one of the preceding claims characterized in that the transfer layer (2b) between the magnetic layer (6') and the signing layer (9') comprises at least one diffraction layer (3') accommodating a diffractionally effective pattern (7), in particular a holographic one, the signing layer (8) being zonally applied in such a way that the diffractionally effective pattern (7) is still recognizable from the side of the signing layer (9') after the carrier foil (1) has been detached.

4. A stamping or blocking foil according to claim 3, characterized in that the signing layer (9') is provided in delimited areal zones of the stamping or blocking foil opposite the areal zones having the diffractionally effective pattern (7).

5. A stamping or blocking foil according to 3, characterized in that the signing layer (9') is arranged to cover the diffraction layer (3') only in the manner of a grid.

6. A stamping or blocking foil according to one of the preceding claims, characterized in that the areal zones of the diffraction layer (3') and/or of the magnetic layer (6') not covered by the signing layer (9') are covered by a clear lacquer layer (10) of a suitable thickness to form a flat surface (11) of the transfer layer (2b).

7. A stamping or blocking foil according to claim 6 characterized in that the clear lacquer layer (10) is formed by a detachable lacquer.

8. A stamping or blocking foil according to one of claims 1 to 7, characterized in that the diffraction layer (3') is formed by a protective lacquer layer for the magnetic layer (6) into which the diffractionally effective pattern (7) is blocked in.

9. A stamping or blocking foil according to claim 8, characterized in that the diffractionally effective pattern (7) is blocked in on the side of the diffraction layer (3') facing the magnetic layer.

10. A stamping or blocking foil according to one of claims 3 to 9, characterized in that on the side of the magnetic layer (6) facing the carrier foil (1), provision is made between said magnetic layer and a protective lacquer layer (3') for a layer (4) of a non-magnetisable metal which shows the diffractionally effective pattern (7).

11. A stamping or blocking foil according to claim 10, characterized in that the metal layer (4) is a vapour-deposited layer of aluminium or of an aluminium alloy.

12. A stamping or blocking foil according to one of the preceding claims characterized in that the magnetic layer (6, 6') and/or the signing layer (9, 9') and/or the diffraction layer (3') and/or the clear lacquer layer (10) and/or the barrier layer (3, 3') is coloured.

## Revendications

1. Feuille à marquer, en particulier feuille à marquer à chaud, constituée d'un support pelliculaire (1) et d'une couche de transfert (2a, 2b), pouvant être séparée de cette dernière, et qui présente au moins une couche magnétique (6, 6') en une émulsion de particules magnétisables dans un liant, laquelle, sur sa face opposée au support pelliculaire (1), porte éventuellement une couche adhésive servant à la fixation de la couche de transfert sur un substrat, caractérisée en ce que la couche de transfert (2a, 2b) présente, sur la face de la couche magnétique (6, 6') dirigée vers le support pelliculaire (1), au moins une couche de vernis servant de couche de marquage (9, 9') sur laquelle on peut écrire, formant après empreinte et séparation du support pelliculaire la surface (11), tandis qu'entre la couche de marquage (9, 9') et la couche magnétique (6, 6') est prévue une couche barrière (3, 3'), formée d'une couche d'un vernis réticulable, empêchant que le solvant contenu dans la couche magnétique (6, 6') ne provoque une dissolution de la couche de marquage.

2. Feuille à marquer selon la revendication 1, caractérisée en ce que la couche de marquage (9, 9') est formée d'une couche de vernis rugueuse, qui éclate lors de la séparation du support pelliculaire (1).

3. Feuille à marquer selon l'une des revendications précédentes, caractérisée en ce que la couche de transfert (2b) comprend, entre la couche magnétique (6') et la couche de marquage (9'), au moins une couche de diffraction (3') recevant un dessin (7) à effet de diffraction, en particulier holographique, la couche de marquage (8) étant appliquée par zones de façon que le dessin (7) à effet de diffraction puisse encore, après séparation du support pelliculaire (1), être reconnu à partir de la face de la couche de marquage (9').

4. Feuille à marquer selon la revendication 3, caractérisée en ce que la couche de marquage (9') est prévue dans des zones superficielles de la feuille à marquer, délimitées par rapport aux zones superficielles présentant le dessin (7) à effet de diffraction.

5. Feuille à marquer selon la revendication 3, caractérisée en ce que la couche de marquage (9') est disposée de façon à ne recouvrir que par un quadrillage la couche de diffraction (3').

6. Feuille à marquer selon l'une des revendications précédentes, caractérisée en ce que les zones superficielles de la couche de diffraction (3') et/ou de la couche magnétique (6') non recouvertes par la couche de marquage (9') sont, pour former une surface plane (11) de la couche de transfert (2b), recouvertes d'une couche d'un vernis transparent (10) d'épaisseur correspondante.

7. Feuille à marquer selon la revendication 6, caractérisée en ce que la couche de vernis transparent (10) est formée d'un vernis séparable.

8. Feuille à marquer selon l'une des revendications 1 à 7, caractérisée en ce que la couche de diffraction (3') est formée d'une couche de vernis de protection de la couche magnétique (6), dans laquelle est incrusté le dessin (7) à effet de diffraction.

9. Feuille à marquer selon la revendication 8, caractérisée en ce que le dessin (7) à effet de diffraction est incrustré sur la face de la couche de diffraction (3') dirigée vers la couche magnétique.

10. Feuille à marquer selon l'une des revendications 3 à 9, caractérisée en ce que, sur la face de la couche magnétique (6) dirigée vers le support pelliculaire (1), entre cette dernière et une couche de vernis de protection (3'), est prévue une couche (4) en un métal non-magnétisable, qui présente le dessin (7) à effet de diffraction.

11. Feuille à marquer selon la revendication 10, caractérisée en ce que la couche métallique (4) est une couche déposée par métallisation sous vide d'aluminium ou d'un alliage d'aluminium.

12. Feuille à marquer selon l'une des revendications précédentes, caractérisée en ce que la couche magnétique (6, 6') et/ou la couche de marquage (9, 9') et/ou la couche de diffraction (3') et/ou la couche de vernis transparent (10) et/ou la couche barrière (3, 3') sont colorées.

FIG. 1

FIG. 2